# EUROPEAN PATENT APPLICATION

(11) **EP 4 838 657 A2**
(43) Date of publication of application: **11.11.2026**
(21) Application number: 26201377.4
(22) Date of filing: 27.08.2026
(51) Int. Cl.: H01M 50/231, H01M 50/291, H01M 50/293, H01M 50/593

(54) **ENERGY STORAGE DEVICE**

(30) Priority: 25.02.2026 CN 202610226300; 25.02.2026 CN 202620226911 U
(71) Applicant: Shenzhen Hello Tech Energy Co., Ltd, Shenzhen, Guangdong 518109 (CN)
(72) Inventor: The designation of the inventor has not yet been filed
(74) Representative: Zacco Norway AS

(57) **Abstract**

Provided is an energy storage device, which belongs to the field of battery technology. The energy storage device includes an insulation layer, at least one battery cell, a metal housing and a battery cell module support. The battery cell has a first end and a second end that are disposed opposite to each other. The metal housing has at least one first battery cell accommodation groove formed at an inner surface of the metal housing, and the first end of each of the at least one battery cell is accommodated in a corresponding one of the at least one first battery cell accommodation groove. The insulation layer covers a surface, facing towards the battery cell, of the corresponding first battery cell accommodation groove. The battery cell is insulated from the metal housing through the insulation layer. The battery cell module support is connected to the metal housing.

## Description

### CROSS-REFERENCE TO RELATED APPLICATION

This application claims priority to and benefits of Chinese patent applications Nos. 202610226300.4 and 202620226911.4, filed with China National Intellectual Property Administration on February 25, 2026.

### FIELD

The present disclosure belongs to the field of battery technology, and specifically relates to an energy storage device.

### BACKGROUND

The housing of the energy storage device is generally a metal component, and short circuits easily occur when the battery cell comes into contact with the housing, posing a safety hazard. In the related art, two plastic supports are generally assembled with the battery cell to form a battery module, and the battery module is then assembled inside the housing, to solve the problem of short circuits caused by contact between the battery cell and the housing. However, the related art also results in a complicated structure of the energy storage device.

### SUMMARY

In view of the above, the present disclosure provides an energy storage device, which can solve a problem that a short circuit is prone to occur between a battery cell and a metal housing.

A technical solution of the present disclosure provides an energy storage device. The energy storage device includes: an insulation layer; at least one battery cell each having a first end and a second end that are disposed opposite to each other; a metal housing having at least one first battery cell accommodation groove formed at an inner surface of the metal housing, the first end of each of the at least one battery cell being accommodated in a corresponding one of the at least one first battery cell accommodation groove, wherein a surface, facing towards the battery cell, of the corresponding one first battery cell accommodation groove is covered by the insulation layer, and the at least one battery cell is insulated from the metal housing through the insulation layer; and a battery cell module support connected to the metal housing. The battery cell module support has at least one second battery cell accommodation groove corresponding to the least one first battery cell accommodation groove. The second end of each of the at least one battery cell is accommodated in a corresponding one of the at least one second battery cell accommodation groove.

In the above technical solution, the metal housing is directly fitted with the first end of each of the at least one battery cell through the at least one first battery cell accommodation groove to fix an end of each of the at least one battery cell. In this way, a support component between the at least one battery cell and the metal housing can be eliminated, to simplify a structure of the energy storage device, reducing costs of the energy storage device. In addition, the first end of each of the at least one battery cell is fittingly inserted into the corresponding first battery cell accommodation groove arranged at the inner surface of the metal housing. The insulation layer covering an inner wall of the at least one first battery cell accommodation groove can block direct contact between the at least one battery cell and the metal housing, which can reduce a risk of the short circuit.

In some exemplary embodiments of the present disclosure, the insulation layer includes an elastic insulation layer.

In the above technical solution, the elastic insulation layer can absorb a height tolerance between the at least one battery cell, to improve flatness of an electrode position of the at least one battery cell. In addition, the insulation layer generates a reverse elastic force after being compressed. Such elastic force can counteract at least part of gravity of the at least one battery cell, which can reduce supporting load exerted by an electrical connector upon supporting the battery cell, to lower a risk of fracture and damage of the electrical connector caused by excessive stress.

In some exemplary embodiments of the present disclosure, the at least one battery cell includes a plurality of battery cells. A thickness of a portion of the insulation layer that is arranged between an end surface of the first end of each of the plurality of battery cells and a corresponding one of the at least one first battery cell accommodation groove is greater than or equal to a height tolerance value of the battery cell, and/or a thickness of a portion of the insulation layer that is arranged between a side surface of the first end of each of the plurality of battery cells and a corresponding one first battery cell accommodation groove is greater than or equal to a diameter tolerance value of the battery cell.

In the above technical solution, by setting the thickness of a portion of the insulation layer that is arranged between the end surface of the first end of each of the plurality of battery cells and the corresponding one first battery cell accommodation groove to be greater than or equal to the height tolerance value of battery cell, regardless of height deviation of the plurality of battery cells, the insulation layer can provide sufficient isolation space, effectively preventing occurrence of the short circuit and ensuring insulation reliability between the end surface of each of the plurality of battery cells and the metal housing. Moreover, by setting the thickness of a portion of the insulation layer that is arranged between the side surface of the first end of each of the plurality of battery cells and the corresponding one first battery cell accommodation groove to be greater than or equal to the diameter tolerance value of the battery cell, dimensional variations of the plurality of battery cells in a diameter direction can be compensated. Regardless of diameter deviation of the plurality of battery cells, a favorable insulation state can be constantly maintained between the side surface of each of the plurality of battery cells and the metal housing, further improving safety and stability of an entire energy storage device.

In some exemplary embodiments of the present disclosure, the insulation layer is configured as a vacuum-formed structure.

In the above technical solution, the insulation layer that fits almost perfectly with the at least one first battery cell accommodation groove can be directly formed by vacuum forming. In this way, connection stability can be improved and a risk of a failure of the insulation layer can be reduced. In addition, the vacuum-formed structure makes the thickness of the insulation layer uniform, in such a manner that the insulation layer can provide stable and reliable insulation protection at all parts. Therefore, localized weak insulation points caused by uneven thickness are avoided, further enhancing insulation safety and reliability of the energy storage device.

In some exemplary embodiments of the present disclosure, each of the at least one first battery cell accommodation groove includes a first rib and a second rib that both protrude relative to an inner bottom surface of the metal housing. The first rib is an annular structure that is continuously or discontinuously distributed in a circumferential direction. The first rib has a protrusion height greater than a protrusion height of the second rib. The first rib is configured to be sleeved around an outer side of the first end of each of the at least one battery cell to accommodate the first end. The second rib is arranged at an inner side of the first rib. The second rib is configured to support an end surface of the first end of each of the at least one battery cell.

In the above technical solution, the first rib can not only provide an accommodation space for the first end of each of the at least one battery cell, but also serve as a guide space for the at least one battery cell. The at least one battery cell is guided to slide along the first rib. Accordingly, the at least one battery cell can be positioned in a horizontal direction, which prevents the at least one battery cell from shaking or shifting, enhancing stability of the at least one battery cell. The second rib is configured to support the end surface of the first end of each of the at least one battery cell. The second rib acts as a reinforcement structure to provide reliable supporting force for the battery cell.

In some exemplary embodiments of the present disclosure, the insulation layer has a bottom wall located in an area enclosed by the first rib and a side wall covering an inner side surface of the first rib. The bottom wall is arranged to correspond to a top surface of the second rib and a portion between the first rib and the second rib. An edge of the bottom wall is joined to a bottom end of the side wall.

In the above technical solution, the insulation layer can fully cover an area of the first battery cell accommodation groove where the battery cell is fitted into the first battery cell accommodation groove, providing all-round insulation protection for the battery cell.

In some exemplary embodiments of the present disclosure, the insulation layer further has a connection wall covering a top surface of the first rib and disposed to correspond to an area between adjacent first ribs.

In the above technical solution, the connection wall covers the top surface of the first rib, which can block an electrical path between the top surface of the first rib and the at least one battery cell, further reducing the risk of the short circuit. In addition, the connection wall covers the area between the adjacent first ribs, which can shield an exposed area of the metal housing. In this way, insulation reliability and safety of the entire energy storage device can be further improved.

In some exemplary embodiments of the present disclosure, the second rib is an annular structure that is continuously or discontinuously distributed in a circumferential direction. An avoidance space is enclosed by the second rib and configured to be disposed corresponding to an end portion of the first end of each of the at least one battery cell. A pressure relief valve is disposed at the first end of each of the at least one battery cell and arranged to face towards the avoidance space.

In the above technical solution, if thermal runaway occurs in the battery cell, hot gas discharged from the battery cell through the pressure relief valve can enter the avoidance space, which can reduce a risk of thermal runaway accident escalation and improve the safety and stability of the energy storage device.

In some exemplary embodiments of the present disclosure, an exhaust channel is formed between adjacent first battery cell accommodation grooves of the plurality of first battery cell accommodation grooves. The exhaust channel is in communication with the avoidance space and is configured to discharge air from the avoidance space.

In the above technical solution, the exhaust channel is formed between the adjacent first battery cell accommodation grooves of the plurality of first battery cell accommodation grooves, and the exhaust channel is in communication with the avoidance space, so that the hot gas can be discharged through the exhaust channel. Therefore, excessive pressure accumulation in the avoidance space can be avoided, effectively reducing a risk of explosion.

In some exemplary embodiments of the present disclosure, the metal housing is provided with a first positioning portion. The battery cell module support is provided with a second positioning portion. The first positioning portion is positioned and mated with the second positioning portion. The first positioning portion is connected and fixed to the second positioning portion by a fastener.

In the above technical solution, the first positioning portion is positioned and mated with the second positioning portion, and the first positioning portion is connected and fixed to the second positioning portion by the fastener, in such a manner that the battery cell module support and the metal housing are integrally connected. In this way, mounting stability of the at least one battery cell can be further improved.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of an energy storage device in some embodiments of the present disclosure.
FIG. 2 is a first schematic structural view of a metal housing in some embodiments of the present disclosure.
FIG. 3 is a first schematic structural view of a metal housing and an insulation layer in some embodiments of the present disclosure.
FIG. 4 is a schematic cross-sectional structural view of an energy storage device in some embodiments of the present disclosure.
FIG. 5 is a second schematic structural view of a metal housing and an insulation layer in some embodiments of the present disclosure.
FIG. 6 is a second schematic structural view of a metal housing in some embodiments of the present disclosure.

Reference numerals of the accompanying drawings:
110 battery cell; 111 first end; 112 second end; 113 pressure relief valve; 120 insulation layer; 121 bottom wall; 122 side wall; 123 connection wall; 130 metal housing; 131 first battery cell accommodation groove; 132 first rib; 133 second rib; 134 avoidance space; 135 exhaust channel; 136 first positioning portion; 140 battery cell module support; 141 second battery cell accommodation groove; 142 second positioning portion; 150 fastener; 160 cover.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure. On a basis of the embodiments of the present disclosure, all other embodiments obtained by those skilled in the art without creative labor shall fall within the protection scope of the present disclosure.

Terms "first" and "second" in the specification and claims of the present disclosure may explicitly or implicitly include one or more this feature. In the description of the present disclosure, unless otherwise stated, "plurality" means two or more. In addition, "and/or" in the description and claims represents at least one of the correlated objects, and the symbol "/" generally indicates an "or" relationship between the correlated objects preceding and succeeding the symbol.

In the description of the present disclosure, it should be understood that the orientation or the position indicated by terms such as "protrusion direction" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation to the present disclosure.

In the description of the present disclosure, it should be understood that unless otherwise clearly specified and limited, terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components, unless otherwise specifically defined. For those of ordinary skill in the art, the specific meaning of the above-mentioned terms in the present disclosure can be understood according to specific circumstances.

An energy storage device is a device or a system that stores energy and releases it for use when needed. The energy storage device, whose core function is to address a mismatch between energy production and consumption in time and space, is widely applied in power systems, new energy, transportation, industry, daily life, and other fields.

With regard to the types of the energy storage device, the energy storage device may include balcony photovoltaic energy storage devices, household energy storage devices, and portable energy storage devices.

Balcony photovoltaic energy storage device is designed specifically for urban apartments or families with limited space and configured as a small-capacity, plug-and-play Do-It-Yourself (DIY) photovoltaic energy storage system. It is usually an integrated unit. A user can simply connect a photovoltaic panel to a household socket through simple wiring without the need for a professional electrician. The green electricity generated on a balcony or a terrace may be stored for self-consumption. Its core purpose is to lower a barrier to entry for green energy use, help households save on electricity bills, and serve as an important frontier for popularization of distributed energy.

Household energy storage device refers to a stationary energy storage system designed for detached houses or villas, usually with a capacity of 10 kWh or more, aiming to achieve a higher degree of self-sufficiency in household energy. It not only supports photovoltaic integration but also possesses a powerful standby power function, supplying power to critical loads throughout the house for serval hours or even days when the power grid fails. Through intelligent management, it achieves peak-valley electricity price arbitrage, making it a core device for improving economy and reliability of household power consumption.

Portable energy storage device typically refers to a removable "large outdoor power supply" with a capacity ranging from 0.5 kWh to 3.5 kWh. It features a compact appearance, is provided with a built-in handle or wheel, has a core characteristic of plug-and-play operation without mounting, and can be charged via utility power, vehicle-mounted power, or a solar panel. It primarily provides grid-disconnected power for scenarios such as outdoor camping, self-driving trips, and short-term emergency power standby for households, it is a convenient solution to meet demands for mobile power freedom and short-duration power guarantee.

Currently, a housing of the energy storage devices is generally a metal component, and a short circuit easily occurs when a battery cell comes into contact with the housing, posing a safety hazard. To solve the problem of the short circuit caused by contact between the battery cell and the housing, in the related art, two plastic supports are generally assembled with the battery cell to form a battery module, and the battery module is then assembled inside the housing. However, this assembly method increases structural complexity of the energy storage device. The plastic supports need to be mounted and fixed between battery cells as well as between the battery cell and the housing, which involves assembly and connection of a plurality of components, making an overall assembly process of the energy storage device more complex, reducing a production efficiency, and increasing production costs.

In view of the above, to solve a problem that a short circuit is prone to occur between the battery cell and a metal housing, the embodiments of the present disclosure provide an energy storage device. The energy storage device includes an insulation layer, at least one battery cell, a metal housing, and a battery cell module support. The at least one battery cell each has a first end and a second end that are disposed opposite to each other. The metal housing has at least one first battery cell accommodation groove formed at an inner surface of the metal housing. The first end of each of the at least one battery cell is accommodated in a corresponding one of the at least one first battery cell accommodation groove. The insulation layer covers a surface, facing towards the battery cell, of the corresponding one first battery cell accommodation groove. The at least one battery cell is insulated from the metal housing through the insulation layer. The battery cell module support is connected to the metal housing. The battery cell module support has at least one second battery cell accommodation groove corresponding to the least one first battery cell accommodation groove. The second end of each of the at least one battery cell is accommodated in a corresponding one of the at least one second battery cell accommodation groove. By disposing the at least one first battery cell accommodation groove in the metal housing as a positioning portion that is fitted with the at least one battery cell, direct assembly between the at least one battery cell and metal housing is achieved. In this way, a support component between the at least one battery cell and the metal housing can be eliminated, to simplify a structure of the energy storage device, reducing costs of the energy storage device. In addition, the insulation layer is disposed between the at least one first battery cell accommodation groove and the at least one battery cell, which can solve the problem that the short circuit is prone to occur between the at least one battery cell and the metal housing.

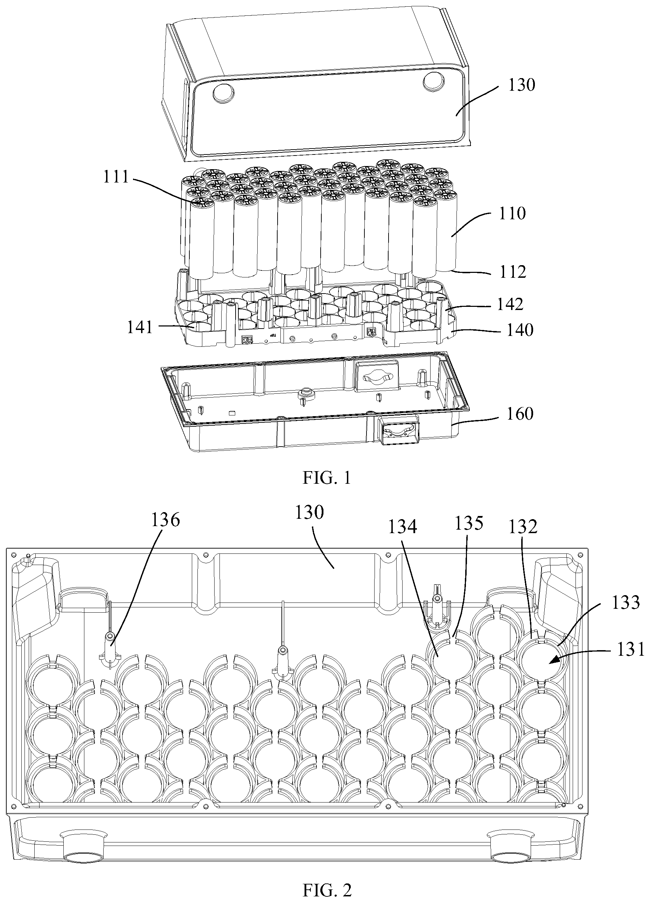

The energy storage device provided in the embodiments of the present disclosure will be described in detail below with reference to FIG. 1 to FIG. 6.

As illustrated in FIG. 1, FIG. 2, FIG. 3, and FIG. 4, in some embodiments, the present disclosure provides an energy storage device including an insulation layer 120, at least one battery cell 110, a metal housing 130, and a battery cell module support 140.

Each of the at least one battery cell 110 has a first end 111 and a second end 112 that are disposed opposite to each other. The metal housing 130 has at least one first battery cell accommodation groove 131 formed at an inner surface of the metal housing 130. The first end 111 of each of the at least one battery cell 110 is accommodated in a corresponding one of the at least one first battery cell accommodation groove 131. The insulation layer 120 covers a surface, facing towards the battery cell 110, of the corresponding first battery cell accommodation groove 131. The at least one battery cell 110 is insulated from the metal housing 130 through the insulation layer 120. The battery cell module support 140 is connected to the metal housing 130. The battery cell module support 140 has at least one second battery cell accommodation groove 141 corresponding to the at least one first battery cell accommodation groove 131. The second end 112 of each of the at least one battery cell 110 is accommodated in a corresponding one of the at least one second battery cell accommodation groove 141.

The battery cell 110, as a core of energy storage, stores and releases energy through charging and discharging processes. The battery cell has the first end 111 and the second end 112 that are disposed opposite to each other.

The metal housing 130 serves as an outer frame of the energy storage device and is configured to support an internal component such as the at least one battery cell 110. The at least one first battery cell accommodation groove 131 is disposed at the inner surface of the metal housing 130 and serves as a positioning portion for the first end 111 of each of the at least one battery cell 110. During assembly, the metal housing 130 is directly fitted with the first end 111 of each of the at least one battery cell 110 via the at least one first battery cell accommodation groove 131, to fix an end of each of the at least one battery cell 110. In this way, a support component between the at least one battery cell 110 and the metal housing 130 can be eliminated, to simplify a structure of the energy storage device, reducing costs of the energy storage device.

The insulation layer 120 covers the surface, facing towards the battery cell 110, of the at least one first battery cell accommodation groove 131. When the first end 111 of each of the at least one battery cell 110 is accommodated in the corresponding first battery cell accommodation groove 131, the insulation layer 120 can block electrical contact between the at least one battery cell 110 and the metal housing 130, achieving insulation to reduce a risk of a short circuit.

The battery cell module support 140 is configured to fix the second end 112 of each of the at least one battery cell 110. The at least one second battery cell accommodation groove 141 is disposed at the battery cell module support 140 and in cooperation with the at least one first battery cell accommodation groove 131 of the housing to achieve "two-end clamping" of the at least one battery cell 110. Therefore, a risk of loosening caused by single-point fixation can be avoided to improve stability of the energy storage device.

In the above embodiment, the metal housing 130 is directly fitted with the first end 111 of each of the at least one battery cell 110 through the at least one first battery cell accommodation groove 131 to fix an end of each of the at least one battery cell 110. In this way, a support component between the at least one battery cell 110 and the metal housing 130 can be eliminated, to simplify the structure of the energy storage device, reducing the costs of the energy storage device. In addition, the first end 111 of each of the at least one battery cell 110 is fitted and inserted into the corresponding first battery cell accommodation groove 131 disposed at the inner surface of the metal housing 130. The insulation layer 120 covering an inner wall of the at least one first battery cell accommodation groove can block direct contact between the at least one battery cell 110 and the metal housing 130, reducing the risk of the short circuit.

In some embodiments, the insulation layer 120 includes an elastic insulation layer.

Since a height tolerance is unavoidable during a manufacturing process of the battery cell 110, the insulation layer 120 is designed to be elastic. During assembly, after the first end 111 of each of the at least one battery cell 110 is inserted into the corresponding first battery cell accommodation groove 131, the insulation layer 120 is compressed by the battery cell 110. Since the insulation layer 120 is elastic, the elastic layer is compressed by a taller one of battery cells 110, in such a manner that end surfaces of all the at least one battery cell 110 are kept coplanar. That is, the height tolerance of the at least one battery cell 110 can be absorbed, to improve flatness of an electrode position of the at least one battery cell 110. In addition, the insulation layer 120 generates a reverse elastic force after being compressed. Such elastic force can counteract at least part of gravity of the at least one battery cell 110, which can reduce supporting load exerted by an electrical connector upon supporting the battery cell 110, to lower a risk of fracture and damage of the electrical connector caused by excessive stress.

In some embodiments, the at least one battery cell 110 includes a plurality of battery cells 110. A thickness of a portion of the insulation layer 120 that is arranged between an end surface of the first end 111 of each of the plurality of battery cells 110 and a corresponding one first battery cell accommodation groove is greater than or equal to a height tolerance value of the battery cell 110.

It should be understood that during the manufacturing process, a certain height tolerance occurs between different battery cells 110 due to various factors. If the thickness of the insulation layer 120 is excessively small, the insulation layer 120 is unable to fully absorb these height differences, in such a manner that some of the battery cells 110 are too close to the metal housing 130, or even in direct contact with the metal housing 130, causing a potential safety hazard such as the short circuit. Therefore, by setting the thickness of a portion of the insulation layer 120 that is arranged between the end surface of the first end 111 of each of the plurality of battery cells 110 and the corresponding one first battery cell accommodation groove 131 to be greater than or equal to the height tolerance value (a height tolerance zone width) of the battery cell 110, regardless of height deviation of the plurality of battery cells 110, the insulation layer 120 can provide sufficient isolation space, effectively preventing occurrence of the short circuit and ensuring insulation reliability between the end surface of each of the plurality of battery cells 110 and the metal housing 130.

In an actual manufacturing process, the battery cell 110 has the height tolerance and a diameter tolerance. Therefore, in this embodiment, a thickness of a portion of the insulation layer 120 that is arranged between a side surface of the first end 111 of each of the plurality of battery cells 110 and a corresponding one first battery cell accommodation groove 131 is greater than or equal to a diameter tolerance value (a diameter tolerance zone width) of the battery cell 110. Similarly, by setting the thickness of a portion of the insulation layer 120 that is arranged between the side surface of the first end 111 of each of the plurality of battery cells 110 and the corresponding one first battery cell accommodation groove 131 to be greater than or equal to the diameter tolerance value of the battery cell 110, dimensional variations of the plurality of battery cells 110 in a diameter direction can be compensated. Regardless of diameter deviation of the plurality of battery cells 110, a favorable insulation state can be constantly maintained between the side surface of each of the plurality of battery cells 110 and the metal housing 130, further improving safety and stability of the entire energy storage device.

In some embodiments, the insulation layer 120 is configured as a vacuum-formed structure.

Vacuum forming refers to forming an insulation component from an insulation material using a vacuum forming process. In practical applications, the at least one first battery cell accommodation groove 131 of the metal housing 130 may be designed with a non-standard geometric profile (such as a rectangular groove with a chamfer or an arc-shaped groove) due to a shape of the plurality of battery cells 110 or a structure of the housing. The insulation layer 120 that fits almost perfectly with the at least one first battery cell accommodation groove 131 can be directly formed by vacuum forming. In this way, connection stability can be improved and a risk of a failure of the insulation layer 120 can be reduced. In addition, the vacuum-formed structure can make the thickness of the insulation layer 120 uniform, in such a manner that the insulation layer 120 can provide stable and reliable insulation protection at all parts. Therefore, localized weak insulation points caused by uneven thickness are avoided, further enhancing insulation safety and reliability of the energy storage device.

It should be understood that the insulation layer 120 may be made of silicone rubber, polyurethane, etc.

As illustrated in FIG. 2, FIG. 4, and FIG. 5, in some embodiments, each of the at least one first battery cell accommodation groove 131 includes a first rib 132 and a second rib 133 that both protrude relative to an inner bottom surface of the metal housing 130. The first rib 132 is an annular structure that is continuously or discontinuously distributed in a circumferential direction. The first rib 132 has a protrusion height higher than a protrusion height of the second rib 133. The second rib 133 is arranged at an inner side the first rib 132. The first rib 132 is configured to be sleeved around an outer side of the first end 111 of each of the at least one battery cell 110 to accommodate the first end 111. The second rib 133 is configured to support an end surface of the first end 111 of each of the at least one battery cell 110.

In an exemplary embodiment of the present disclosure, the first rib 132 protrudes relative to the inner bottom surface of the metal housing 130 and is distributed continuously or discontinuously in the circumferential direction (it may be a complete annular rib or a segmented annular rib). The second rib 133 is arranged at the inner side of the first rib 132 and has the protrusion height lower than the protrusion height of the first rib 132. During assembly, after the first end 111 of each of the at least one battery cell 110 is inserted into the corresponding first battery cell accommodation groove 131, the first rib 132 is sleeved around the outer side of the first end 111 of each of the at least one battery cell 110, providing an accommodation space for the first end 111 of each of the at least one battery cell 110. The second rib 133 is configured to support the end surface of the first end 111 of each of the at least one battery cell 110, providing supporting force for the battery cell 110.

In the above embodiment, the first rib 132 can not only provide the accommodation space for the first end 111 of each of the at least one battery cell 110, but also serve as a guide space for the at least one battery cell 110, guiding the battery cell 110 to slide along the first rib 132. Accordingly, the at least one battery cell 110 can be positioned in a horizontal direction, which prevents the at least one battery cell 110 from shaking or shifting, enhancing stability of the at least one battery cell 110. The second rib 133 is configured to support the end surface of the first end 111 of each of the at least one battery cell 110. The second rib 133 acts as a reinforcement structure to provide reliable supporting force for the battery cell 110.

As illustrated in FIG. 1, FIG. 2, and FIG. 3, in some embodiments, the insulation layer 120 has a bottom wall 121 located in an area enclosed by the first rib 132 and a side wall 122 covering an inner side surface of the first rib 132. The bottom wall 121 corresponds to a top surface of the second rib 133 and a portion between the first rib 132 and the second rib 133. An edge of the bottom wall 121 is joined to a bottom end of the side wall 122.

In an exemplary embodiment of the present disclosure, the insulation layer 120 includes the bottom wall 121 and the side wall 122. The bottom wall 121 covers the top surface of the second rib 133 and the portion between the first rib 132 and the second rib 133. The side wall 122 covers the inner side surface of the first rib 132. In this way, the insulation layer 120 can fully cover an area of the first battery cell accommodation groove 131 where the battery cell 110 is fitted into the first battery cell accommodation groove 131, providing all-round insulation protection for the battery cell 110.

In practical applications, the insulation layer 120 further has a connection wall 123. The connection wall 123 covers a top surface of the first rib 132 and is arranged to correspond to an area between adjacent first ribs 132.

In the above embodiment, the connection wall 123 covers the top surface of the first rib 132, which can block an electrical path between the top surface of the first rib 132 and the battery cell 110, further reducing the risk of the short circuit.

It should be understood that, a portion of the metal housing 130, that is arranged in the area between the adjacent first ribs 132, may be exposed in the related art. In an environment with high humidity or conductive dust, a current may form an indirect conductive path to the metal housing 130 through media such as moisture and dust particles in the air, causing the risk of the short circuit. Therefore, in the present disclosure, the connection wall 123 covers the area between the adjacent first ribs 132, which can shield an exposed area of the metal housing 130. In this way, insulation reliability and safety of the entire energy storage device can be further improved.

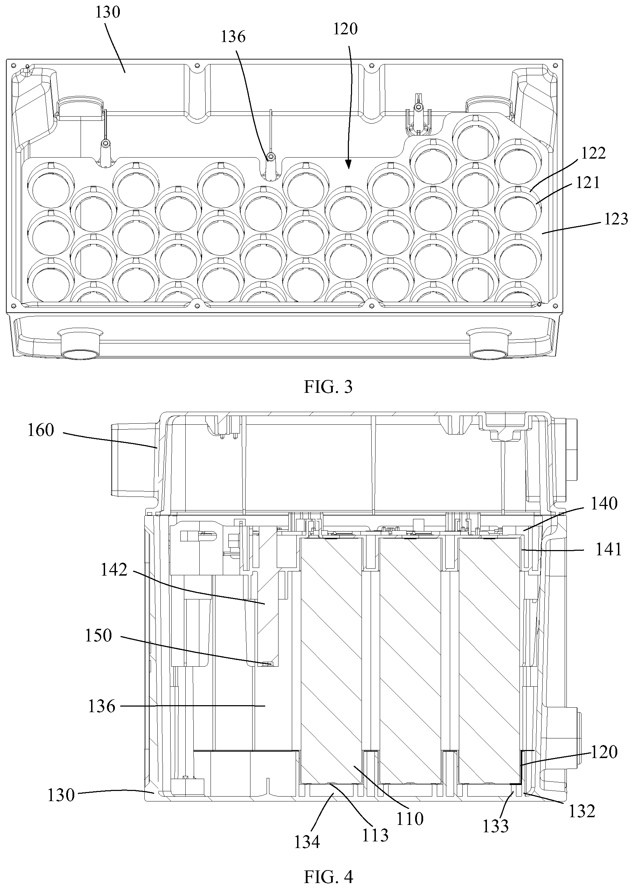

In some embodiments, as illustrated in FIG. 3, the at least one first battery cell accommodation groove 131 includes a plurality of first battery cell accommodation grooves 131. In the plurality of first battery cell accommodation grooves 131, the side wall 122 of the insulation layer 120 covering the inner side surface of the first rib 132 of one of two adjacent first battery cell accommodation grooves 131 is connected to the side wall 122 of the insulation layer 120 covering the inner side surface of the first rib 132 of the other one of the two adjacent first battery cell accommodation grooves 131 via the connection wall 123. In other words, the side wall 122 covering the inner side surface of one of two adjacent first ribs 132 is connected to the side wall 122 covering the inner side surface of the other one of the two adjacent first ribs 132 via the connection wall 123.

In the above embodiment, the side walls 122 located and covered at the inner side surfaces of the two adjacent first ribs 132 are connected via the connection wall 123, which can block the electrical path between the top surface of the first rib 132 and the at least one battery cell 110, further reducing the risk of the short circuit.

In some embodiments, the second rib 133 is an annular structure that is continuously or discontinuously distributed in a circumferential direction. An avoidance space 134 is enclosed by the second rib 133 and configured to be arranged to correspond to an end portion of the first end 111 of each of the at least one battery cell 110. A pressure relief valve 113 is disposed at the first end 111 of each of the at least one battery cell 110 and arranged to face towards the avoidance space 134.

In the above embodiment, the second rib 133 may have the annular structure that is continuously or discontinuously distributed in the circumferential direction. In addition, the avoidance space 134 is enclosed by the second rib 133 and serves as a safety reserve space for the at least one battery cell 110. During assembly, when the first end 111 of each of the at least one battery cell 110 is inserted into the corresponding first battery cell accommodation groove 131, the first end 111 is located above the avoidance space 134. If thermal runaway occurs in the battery cell 110, hot gas discharged from the battery cell 110 through the pressure relief valve 113 can enter the avoidance space 134, which can reduce a risk of thermal runaway accident escalation and improve the safety and stability of the energy storage device.

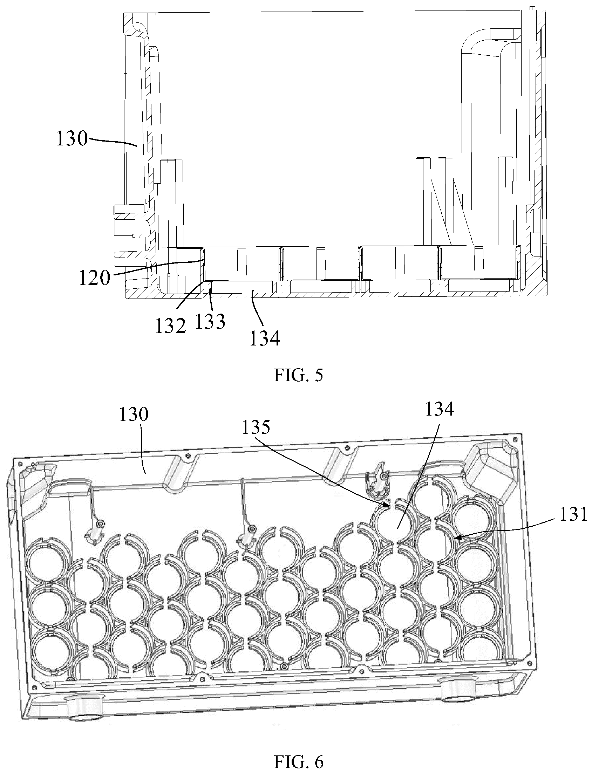

As illustrated in FIG. 6, in the above embodiment, an exhaust channel 135 is formed between adjacent first battery cell accommodation grooves 131 of the plurality of first battery cell accommodation grooves 131. The exhaust channel 135 is in communication with the avoidance space 134 and configured to discharge air from the avoidance space 134.

It should be understood that if the thermal runaway occurs in a battery cell 110, a large amount of hot gas is generated inside the battery cell 110 due to a violent chemical reaction. In this case, the pressure relief valve 113 disposed at the first end 111 of the battery cell 110 opens rapidly, and discharged hot gas can directly enter the avoidance space 134. Since the avoidance space 134 is limited, pressure inside the avoidance space 134 rises rapidly, leading to an explosion. Therefore, in this embodiment, the exhaust channel 135 is formed between the adjacent first battery cell accommodation grooves 131 of the plurality of first battery cell accommodation grooves 131, and the exhaust channel 135 is in communication with the avoidance space 134. In this way, the hot gas can be discharged through the exhaust channel 135. Therefore, excessive pressure accumulation in the avoidance space 134 can be avoided, effectively reducing a risk of explosion.

As illustrated in FIG. 1, FIG. 2, and FIG. 4, in some embodiments, the metal housing 130 is provided with a first positioning portion 136, and the battery cell module support 140 is provided with a second positioning portion 142. The first positioning portion 136 is positioned and mated with the second positioning portion 142, and the first positioning portion 136 is connected and fixed to the second positioning portion 142 by a fastener 150.

In the above embodiment, the first positioning portion 136 is disposed at the metal housing 130, and the second positioning portion 142 is disposed at the battery cell module support 140. The first positioning portion 136 is positioned and mated with the second positioning portion 142, and the first positioning portion 136 is connected and fixed to the second positioning portion 142 by the fastener 150, in such a manner that the battery cell module support 140 and the metal housing 130 are integrally connected. In this way, mounting stability of the at least one battery cell 110 can be further improved.

In another exemplary embodiment of the present disclosure, each of the first positioning portion 136 and the second positioning portion 142 may be a connection post. The connection post has a connection hole for the fastener. The connection hole may be configured to allow the fastener such as a screw, a bolt, or a rivet to pass therethrough for mounting, so that the battery cell module support 140 is fixedly connected to the metal housing 130 through the fastener such as the screw, the bolt, or the rivet.

As illustrated in FIG. 1 and FIG. 4, in some embodiments, the energy storage device further includes a cover 160. The cover 160 and the metal housing 130 form a relatively sealed cavity. The components, such as the at least one battery cell 130 and the battery cell module support 140, are disposed in the cavity. In this way, the internal components such as the at least one battery cell 110 can be protected.

It should be understood that, in some embodiments, the energy storage device may further include an inverter (not shown), a Battery Management System (BMS) control board (not shown), and an Energy Management System (EMS) control board (not shown), which are accommodated inside the metal housing 130.

The inverter is electrically connected to the battery cells 110 and configured to convert direct current generated by the battery cells 110 into alternating current for power-consuming equipment. In this embodiment, the inverter is arranged above the battery cells 110.

The BMS control board is configured to monitor status information of the battery cells 110, such as current, temperature or voltage, so as to prevent the battery cells 110 from overcharging, overdischarging, short circuit and other abnormal conditions and protect the battery cells 110 from damage.

The EMS control board is connected to the battery cells 110 and the inverter, and is configured to acquire user instructions via a user input port to control the charging and discharging of the battery cells 110 and the operation of the inverter.

In some embodiments, the EMS control board and the BMS control board may be integrated into a single board, specifically an EBMS board (Energy and Battery Management System).

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms do not necessarily refer to the same embodiment or example. Further, the particular features, structures, materials, or characteristics can be combined in any suitable manner in one or more embodiments or examples.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. An energy storage device, comprising:
an insulation layer;
at least one battery cell each having a first end and a second end that are disposed opposite to each other;
a metal housing having at least one first battery cell accommodation groove formed at an inner surface of the metal housing, wherein the first end of each of the at least one battery cell is accommodated in a corresponding one of the at least one first battery cell accommodation groove, wherein a surface, facing towards the battery cell, of the corresponding one first battery cell accommodation groove is covered by the insulation layer, and wherein the at least one battery cell is insulated from the metal housing through the insulation layer; and
a battery cell module support connected to the metal housing, wherein the battery cell module support has at least one second battery cell accommodation groove corresponding to the at least one first battery cell accommodation groove, the second end of each of the at least one battery cell being accommodated in a corresponding one of the at least one second battery cell accommodation groove.

2. The energy storage device according to claim 1, wherein the insulation layer comprises an elastic insulation layer.

3. The energy storage device according to claim 2, wherein:
the at least one battery cell comprises a plurality of battery cells; and
a thickness of a portion of the insulation layer that is arranged between an end surface of the first end of each of the plurality of battery cells and the corresponding one first battery cell accommodation groove is greater than or equal to a height tolerance value of the battery cell; and/or
a thickness of a portion of the insulation layer that is arranged between a side surface of the first end of each of the plurality of battery cells and the corresponding one of the at least one first battery cell accommodation groove is greater than or equal to a diameter tolerance value of the battery cell.

4. The energy storage device according to any one of claims 1 to 3, wherein the insulation layer is a vacuum-formed structure.

5. The energy storage device according to any one of claims 1 to 3,
each of the at least one first battery cell accommodation groove comprises a first rib and a second rib, wherein the first rib protrudes relative to an inner bottom surface of the metal housing by a greater height than the second rib protruding relative to the inner bottom surface of the metal housing, wherein:
the first rib is configured to be sleeved around an outer side of the first end of each of the at least one battery cell to accommodate the first end; and
the second rib is arranged at an inner side of the first rib, and the second rib is configured to support an end surface of the first end of each of the at least one battery cell.

6. The energy storage device according to claim 5, wherein the first rib is an annular structure continuously or discontinuously distributed in a circumferential direction

7. The energy storage device according to claim 5, wherein the insulation layer has a bottom wall located in an area enclosed by the first rib, the bottom wall corresponding to a top surface of the second rib and a portion between the first rib and the second rib.

8. The energy storage device according to claim 7, wherein the insulation layer has a side wall covering an inner side surface of the first rib, an edge of the bottom wall being joined to a bottom end of the side wall.

9. The energy storage device according to claim 8, wherein the insulation layer further has a connection wall covering a top surface of the first rib and arranged to correspond to an area between adjacent first ribs.

10. The energy storage device according to claim 9, wherein:
the at least one first battery cell accommodation groove comprises a plurality of first battery cell accommodation grooves; and
the side wall of the insulation layer covering the inner side surface of the first rib of one of two adjacent first battery cell accommodation grooves of the plurality of first battery cell accommodation grooves is connected to the side wall of the insulation layer covering the inner side surface of the first rib of the other one of the two adjacent first battery cell accommodation grooves via the connection wall.

11. The energy storage device according to any one of claims 5 to 10, wherein the second rib is an annular structure continuously or discontinuously distributed in a circumferential direction,
wherein an avoidance space is enclosed by the second rib and disposed to correspond to an end portion of the first end of each of the at least one battery cell, and
wherein a pressure relief valve is disposed at the first end of each of the at least one battery cell and arranged to face towards the avoidance space.

12. The energy storage device according to claim 11, wherein the at least one first battery cell accommodation groove comprises a plurality of first battery cell accommodation grooves, an exhaust channel being formed between adjacent first battery cell accommodation grooves of the plurality of first battery cell accommodation grooves, wherein the exhaust channel is in communication with the avoidance space and configured to discharge air from the avoidance space.

13. The energy storage device according to any one of claims 1 to 3, wherein the metal housing is provided with a first positioning portion, and wherein the battery cell module support is provided with a second positioning portion, the first positioning portion being positioned and mated with the second positioning portion, and the first positioning portion being connected and fixed to the second positioning portion by a fastener.

14. The energy storage device according to claim 1, wherein the energy storage device further comprises an inverter disposed inside the metal housing, the inverter being configured to convert direct current generated by the at least one battery cell into alternating current.

15. The energy storage device according to claim 1, wherein the energy storage device further comprises a battery management system control board disposed inside the metal housing, the battery management system control board being configured to monitor status information of the at least one battery cell.

16. The energy storage device according to claim 14, wherein the energy storage device further comprises an energy management system control board disposed inside the metal housing, wherein the energy management system control board is electrically connected to the at least one battery cell and the inverter, and is configured to acquire user instructions via a user input port and control charging or discharging of the at least one battery cell and an operation of the inverter.
